# EUROPEAN PATENT SPECIFICATION

(11) **EP 2 311 348 B1**
(45) Date of publication and mention of the grant of the patent: **20.02.2013**
(21) Application number: 09797814.2
(22) Date of filing: 30.06.2009
(51) Int. Cl.: A47C 1/025, B60N 2/22, B60N 2/235

(54) **VEHICLE SEAT OPERATING DEVICE AND VEHICLE SEAT RECLINING DEVICE**
FAHRZEUGSITZBETRIEBSVORRICHTUNG UND FAHRZEUGSITZNEIGUNGSVORRICHTUNG
DISPOSITIF D ACTIONNEMENT DE SIÈGE DE VÉHICULE ET DISPOSITIF D INCLINAISON DE SIÈGE DE VÉHICULE

(30) Priority: 16.07.2008 JP 2008185001
(43) Date of publication of application: 20.04.2011
(73) Proprietor: Aisin Seiki Kabushiki Kaisha, Kariya-shi, Aichi 448-8650 (JP)
(72) Inventor: KOJIMA, Yasuhiro, Kariya-shi Aichi 448-8650 (JP); NIHONMATSU, Hideo, Kariya-shi Aichi 448-0027 (JP)
(74) Representative: TBK
(86) International application number: PCT/JP2009/062001
(87) International publication number: WO 2010/007886

(56) References cited:
- EP-A1- 0 622 267
- WO-A2-2007/000041
- JP-A- 2002 209 661
- JP-A- 2002 209 661
- JP-A- 2006 271 581
- JP-A- 2006 271 581

## Description

The present invention relates to a vehicle seat operating device and a vehicle seat reclining device.

As a vehicle seat operating device that allows for adjustment of the state of a vehicle seat (positions such as seat back angular position and the position of a seat in the forward and rearward directions), patent literature 1 describes a vehicle seat reclining device. This device includes a memory mechanism capable of returning the seat back to the angular position that was taken immediately before the seat back was tilted forward to the frontmost side (predetermined limit position) relative to the seat cushion. The seat reclining device includes a first cable liked to a memory operation lever, a lock mechanism, a lever member coaxial with the lock mechanism, a second cable linked to the lever member, a memory gear attached to a seat back frame, and a sector gear coaxial with the lock mechanism. When the memory operation lever is operated thereby pulling the first cable, the lever member pivots and pulls the second cable so that the memory gear meshes with the sector gear. A plate spring is fixed to the seat cushion frame to apply frictional force that holds the sector gear in a manner removable from the seat cushion frame. The plate spring restricts pivoting of the sector gear from an initial position towards one side (correspond to direction in which the seat back frame tilts toward the rear).

When the lock mechanism is unlocked after the meshing of the memory gear and sector gear, the memory gear and sector gear pivot integrally.

When the sector gear pivots, a pin is disengaged from the sector gear, and a holding link integrally including the pin continues the meshing of the memory gear and sector gear and the unlock state of the lock mechanism.

When the seat back frame is tilted backward and then returned to its original position, the sector gear returns to the initial position together with the memory gear so that the memory gear and the sector gear are disengaged from each other. This returns the seat back to the angular position taken just before it was tilted forward.

### [Patent Art Literature]

[Patent Literature 1] JP-A-2006-271581

In patent document 1, it is desirable that the unlocking of the lock mechanism when operating the memory mechanism be further ensured and that the unlocked state be maintained. Thus, a surplus operation amount (stroke) is generally set for the memory operation lever so that the tooth tips of both meshing teeth (pole internal gear and external teeth) in the lock mechanism ends are spaced apart from one another by a constant distance even after disengagement of the meshed teeth tips is completed. This increases the operation force of the memory operation lever in correspondence with the surplus operation amount and may adversely affect the operability.

JP 2002-209661 A discloses a vehicle seat operating device according to the preamble of claim 1 and a vehicle seat reclining a device including the same.

Further vehicle seat operating devices are known from WO 2007/000041 A2 and EP 0622267 A1.

It is the object of the present invention to provide a vehicle seat operating device and a vehicle seat reclining device capable of reducing the surplus operation force of the memory operation leather and improving the operability.

The object of the invention is achieved with a vehicle seat operating device according to claim 1 and a vehicle seat reclining device according to claim 4.

Further advantages developments of the invention are subject-matter of the dependent claims.

Preferably, the guide member includes an unlock guide, and the movement member moves along the unlock guide when the operation lever is operated to switch the lock mechanism from the lock state to the unlock state.

In this structure, the movement member, which is located in the unlock holding guide to maintain the lock mechanism in the unlock state, generates a component force for switching the lock mechanism to the unlock state at the contact surface. Accordingly, even when the operation amount of the memory operation lever is set to the minimum operation amount allowing for the lock mechanism to switch to the unlock state, the component force generates a surplus operation amount that switches the lock mechanism to the unlock state thereby further ensuring that the lock mechanism is maintained in the unlock state. Thus, surplus operation force of the memory operation lever may be decreased to improve operability.

According to claim 1, the guide member is a lever member that pivots when the operation lever is operated, and the lever member pivots in cooperation with a control shaft about a pivot axis that is the same as that of the control shaft to switch the lock mechanism to the unlock state.

In this structure, the guide member pivots about the same axis as the control shaft. Thus, the pivoting of the control shaft, which is in cooperation with the pivoting of the guide member, switches the lock mechanism to the unlock state.

Preferably, the movement member is a pivot member that pivots when moving relative to the unlock holding guide, and the movement member generates a component force in the direction for switching the lock mechanism to the unlock state at the contact surface when urged by the rotational force.

In this structure, the movement member generates component force in the direction for switching the lock mechanism to the unlock state at the contact surface when urged by the rotational force.

The subject matter of claim 4 is a vehicle seat reclining device including the seat operating device of claim 1. The guide member and the movement member form a memory mechanism. When the operation lever is operated, the memory mechanism stores an angular position of a seat back frame relative to a seat cushion frame in the lock state of the lock mechanism. Further, the memory mechanism switches the lock mechanism to the unlock state to permit the seat back frame to tilt to a predetermined tilt position.

In this structure, the operation of the memory mechanism in the vehicle seal reclining device decreases surplus operation force of the memory operation lever and improves the operability.

### BRIEF DESCRIPTION OF THE DRAWINGS

Fig. 1 is an exploded perspective view showing a vehicle seat reclining device according to one embodiment of the present invention;
Fig. 2 is a partial exploded perspective view showing the seat reclining device of Fig. 1;
Fig. 3 is a cross-sectional view of a lock mechanism arranged in the seat reclining device of Fig. 1;
Fig. 4 is a side view of a memory mechanism arranged in the seat reclining device of Fig. 1;
Fig. 5 is a diagram showing the operation of the memory mechanism of Fig. 4;
Fig. 6 is a diagram showing the operation of the memory mechanism of Fig. 4;
Fig. 7 is a diagram showing the operation of the memory mechanism of Fig. 4;
Fig. 8 is a diagram showing the operation of the memory mechanism of Fig. 4;
Fig. 9 is a diagram showing the operation of the memory mechanism of Fig. 4; and
Fig. 10 is a side view showing a vehicle seat including the vehicle seat reclining device of Fig. 1.

### EMBODIMENTS OF THE INVENTION

One embodiment of the present invention will now be discussed with reference to the drawings.

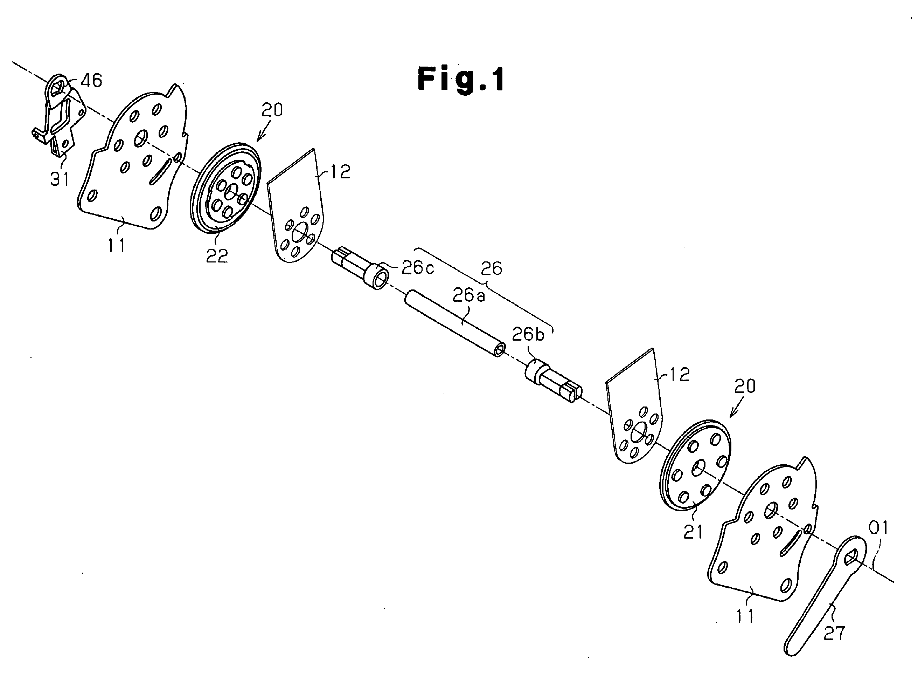

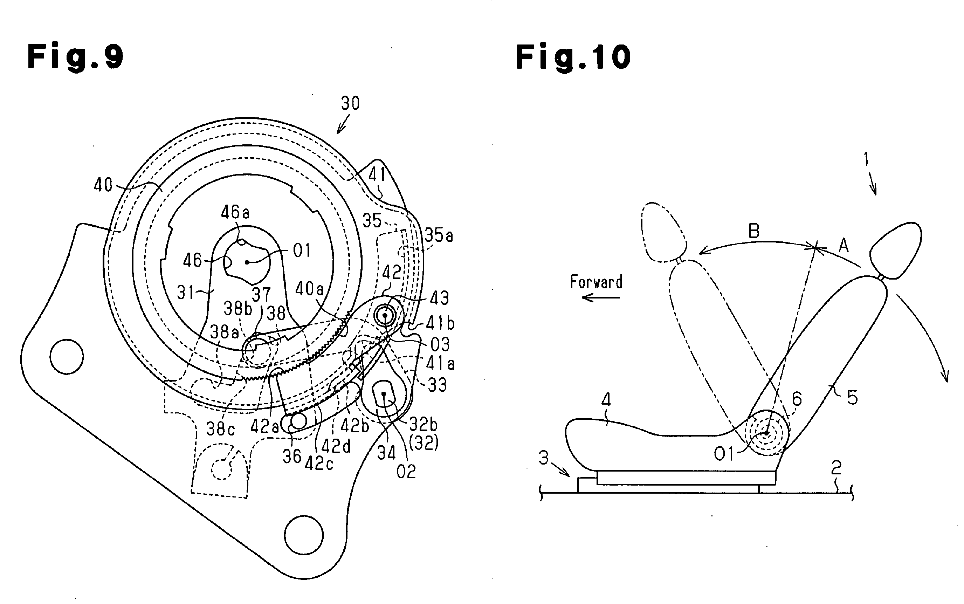

Fig. 10 is a side view showing a vehicle seat 1 including a vehicle seat reclining device according to one embodiment of the present invention. As shown in Fig. 10, two seat slide mechanisms 3, which support a seat 1 to be slidable in the forward and rearward directions of the vehicle, are arranged on a vehicle floor 2. The two seat slide mechanisms 3 are arranged in parallel and spaced apart from each other in the widthwise direction of the vehicle. The two seat slide mechanisms 3 support a seat cushion 4 that forms a seating surface of the seat 1. A seat back 5, which forms a backrest portion of the seat 1, is coupled to a rear end of the seat cushion 4 by two known lock mechanisms 20, shown in Fig. 1, so as to be tiltable in the forward and rearward directions of the vehicle.

The seat back 5 is tilted relative to the seat cushion 4 at an angle included in a seating usage range A, in which the seat back 5 may be adjusted in multiple steps of small angular ranges, and a forward-tilt operation range B, in which the seat back 5 may be tilted forward in a stepless manner from the seating usage range A until reaching a front most position (predetermined limit position). An urging member (spiral spring etc.) 6 that assists the forward tilting of the seat back 5 in the forward-tilt operation range B is arranged around an axis O1 about which the seat back 5 pivots relative to the seat cushion 4. That is, the urging member 6 generates rotational force applied to the seat back 5. The pivot axis O1 extends in the widthwise direction of the vehicle seat 1.

Each seat slide mechanism 3 includes a known slide lock mechanism that selectively prohibits and allows it to operate (slide operation). The slide lock mechanism is a so-called walk-in mechanism allowing for the seat slide mechanism 3 to operate and move the vehicle seat 1 toward the front of the vehicle in cooperation with forward tilting of the seat back 5.

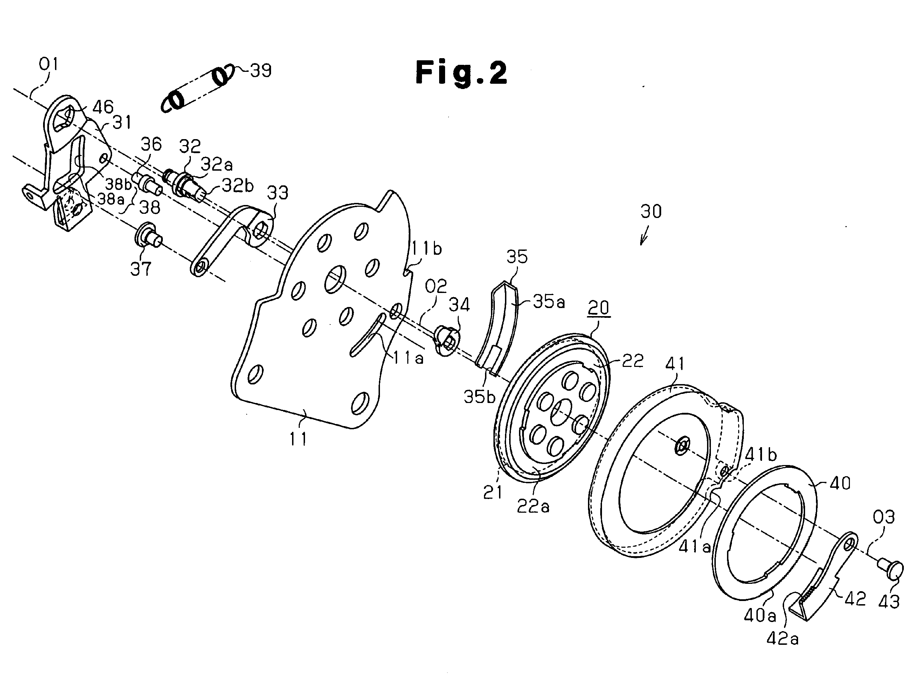

Figs. 1 and 2 are exploded perspective views showing the vehicle seat reclining device of the present embodiment. As shown in Figs. 1 and 2, the seat reclining device includes two seat cushion frames 11 that form the framework of the seat cushion 4. A seat back frame 12, which forms the framework of the seat back 5, is coupled to each seat cushion frame 11 so as to be pivotal about the pivot axis O1 by means of the lock mechanism 20. In Fig. 1, the upper left direction of the pivot axis 01 corresponds to the outward direction of the vehicle, and the lower right direction corresponds to the inward direction of the vehicle. The seat cushion frames 11 and the seat back frames 12 are formed from metal plates. The two lock mechanisms 20 arranged between the seat cushion frames 11 and seat back frames 12 will hereinafter be referred to as the first lock mechanism 20A, which is the lock mechanism 20 arranged toward the outer side of the vehicle, and the second lock mechanism 20B, which is the lock mechanism 20 arranged toward the inner side of the vehicle. Each lock mechanism 20 is selectively switched to a lock state, which restricts pivoting (tilting) of the seat back frame 12 relative to the seat cushion frame 11, and an unlock state, which allows such tilting.

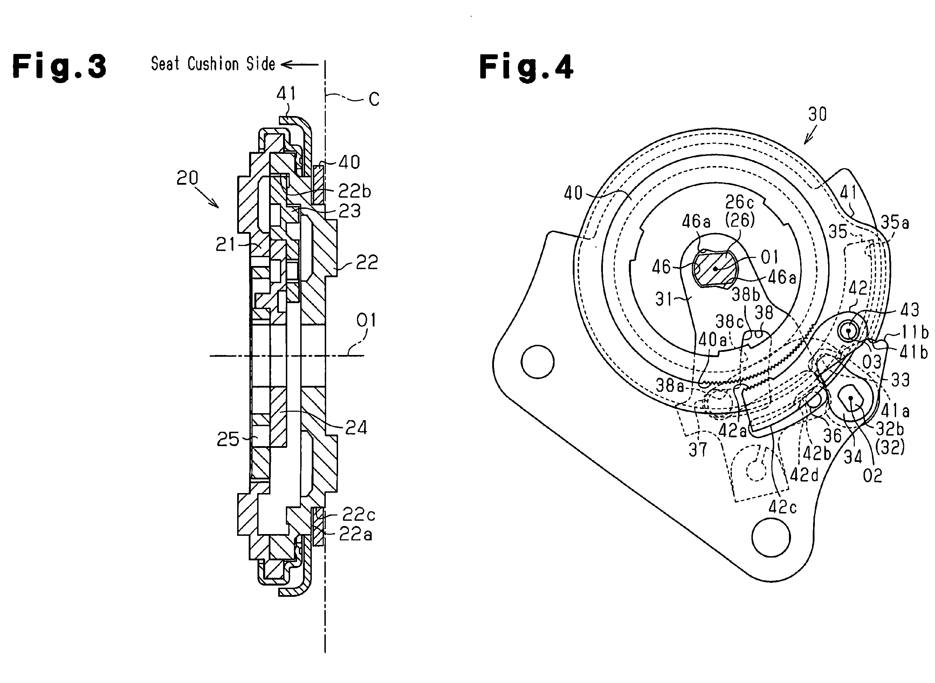

The structure of the first lock mechanism 20A will now be described. The second lock mechanism 20B is symmetric to the first lock mechanism 20A and thus will not be described. As shown in Fig. 3, the first lock mechanism 20A includes an annular lower plate 21, which is welded and fixed to the inner surface of the seat cushion frame 11, and an annular upper plate 22, which is welded and fixed to the outer surface of the seat back frame 12. The upper plate 22 is supported to be pivotal to the lower plate 21 about the pivot axis O1. A step 22c is formed on the inner surface of the upper plate 22, that is, the surface facing the seat back frame 12. This forms an annular coupling surface 22a. An internal gear 22b is formed on the inner circumferential surface of the upper plate 22.

An internal gap formed between the lower plate 21 and the upper plate 22 accommodates a plurality of poles 23, which are coupled so as to be movable in the radial direction about the pivot axis O1, and a single cam 24, which moves the poles 23 in the radial direction. The plurality of poles 23 are arranged so as that they can be meshed with the internal gear 22b. The cam 24 engages the poles 23 and moves the poles 23 in the radial direction when pivoting relative to the upper plate 22 about the pivot axis O1. More specifically, the poles 23 move radially outward as the cam 24 pivots relative to the upper plate 22 in a first direction about the pivot axis 01. This results in the poles 23 meshing with the internal gear 22b and thereby switching the first lock mechanism 20A to the lock state. Alternatively, the poles 23 moves radially inward as the cam 24 pivots relative to the upper plate 22 in a second direction about the pivot axis 01. This results in the disengagement of the poles 23 and the internal gear 22b thereby switching the first lock mechanism 20A to the unlock state. The first lock mechanism 20A includes a spring 25 that urges the cam 24 so as to move the poles 23 radially outward, that is, so as to switch the first lock mechanism 20A to the lock state. The spring 25 may be a spiral spring. The first lock mechanism 20A is normally held in the lock state with the poles 23 being urged by the spring 25.

As shown in Fig. 1, a control shaft 26, which extends in the seat-widthwise direction along the pivot axis O1, includes a pipe-shaped main body 26a, a first hinge 26b, and a second hinge 26c. The first hinge 26b, which is welded and fixed to the end of the main body 26a facing toward the inner side of the vehicle (lower right side in Fig. 1), extends through the seat cushion frame 11, the seat back frame 12, and the second lock mechanism 20B. The second hinge 26c, which is welded and fixed to the end of the main body 26a facing toward the outer side of the vehicle (upper left side in Fig. 1), and extends through the seat cushion frame 11, the seat back frame 12, and the first lock mechanism 20A. The hinges 26b and 26c are each coupled to the cam 24 of the corresponding lock mechanism 20 so as to pivot integrally in the meshed state, for example.

The first hinge 26b has a distal portion projecting from the seat cushion frame 11 towards the inner side of the vehicle so as to be fitted, welded, and fixed to a fitting hole formed in a basal portion of an unlock operation lever 27, which is formed from a metal plate. Accordingly, as the first hinge 26b (control shaft 26) pivots about the pivot axis 01 when the unlock operation lever 27 is operated, the cam 24 of the second lock mechanism 20B pivots integrally with the first hinge 26b thereby switching the second lock mechanism 20B to the unlock state. At the same time, when the second hinge 26c, which is integrated with the first hinge 26b by the main body 26a, pivots about the pivot axis 01, the cam 24 of the first lock mechanism 20A pivots integrally with the hinge 26c thereby switching the first lock mechanism 20A to the unlock state. When the unlock operation lever 27 is released, the cams 24 of the two lock mechanisms 20 are pivoted back together with the control shaft 26 and the unlock operation lever 27 by the urging force of the spring 25. This switches (returns) the two lock mechanisms 20 to the lock state.

The first hinge 26c has a distal portion projecting from the seat cushion frame 11 towards the outer side of the vehicle so as to be loosely fitted to a fitting hole 46 formed in a basal portion of a lever member 31, which is formed from a metal plate. The lever member 31 is linked by a wire to a memory operation lever (not shown), which serves as an operation lever, and pivots about the pivot axis O1 when the memory operation lever is operated. Accordingly, as the lever member 31 pivots the second hinge 26c (control shaft 26) about the pivot axis 01 when the memory operation lever is operated, the cam 24 of the first lock mechanism 20A pivots integrally with the second hinge 25c thereby switching the first lock mechanism 20A to the unlock state. At the same time, when the first hinge 26b, which is integrated with the main body 26a, is pivoted about the pivot axis O1, the cam 24 of the second lock mechanism 20B pivots integrally with the first hinge 26b thereby switching the second lock mechanism 20B to the unlock state.

A memory mechanism 30 including the lever member 31 will now be described with reference to Figs. 2 and 4. The seat cushion frame 11 has a lower right portion as viewed in Fig. 4 that supports a support pin 32. As shown in Fig. 2, the support pin 32 extends along a pivot axis 02, which is parallel to the pivot axis O1. The support pin 32 has a distal portion on the side facing toward the seat cushion frame 11, which includes a first fitting portion 32a and a second fitting portion 32b having diameters which sequentially decrease and parallel flat surfaces. Each of the fitting portions 32a and 32b is columnar shape and has two parallel flat surfaces. The first fitting portion 32a is fitted to a basal portion of an L-shaped arm member 33, which is formed from a metal plate, is arranged at the outer side of the seat cushion frame 11, that is, the side facing toward the lever member 31. The second fitting portion 32b is fitted to a basal portion of a dewdrop-shaped cam member 34, which is formed from a metal plate arranged on the inner side of the seat cushion frame 11, that is, the side facing toward the lock mechanism 20. Accordingly, the arm member 33 and the cam member 34 are coupled by the support pin 32 so as to be integrally pivotal with the seat cushion frame 11 arranged therebetween.

Further, an arc-shaped holding member 35, which extends along the circumferential direction about the pivot axis 01, is welded and fixed to the seat cushion frame 11. The holding member 35 has an end facing the clockwise direction as viewed in Fig. 4 that is adjacent to the distal portion of the cam member 34. The holding member 35 is formed from a metal plate and has an L-shaped cross-section. The holding member 35 has a radially outward portion including an arcuate guide extending about the pivot axis O1 and projecting toward the inner side of the vehicle. The guide has an inner circumferential surface that forms a guide surface 35a. A slot 35b is formed in the holding member 35 at a portion adjacent to the cam member 34. The slot 35b of the holding member 35 permits entrance of the distal portion of the cam member 34.

Further, an arc-shaped elongated guide hole 11 a extending in the circumferential direction about the pivot axis O1 is formed in the seat cushion frame 11 at the left side of the pivot axis 02 (cam member 34) as viewed in Fig. 4. A guide pin 36 extends from the lever member 31 and through the guide hole 11 a. Accordingly, when the lever member 31 pivots about the pivot axis O1, the guide pin 36 cooperatively moves along the guide hole 11 a.

A cylindrical guide 37, which projects toward the lever member 31 parallel to the pivot axis 01, is fixed to a distal portion of the arm member 33. The guide 37 forms a pivot member serving as a movement member together with the arm member 33 and the cam member 34. The lever member 31 includes an L-shaped elongated hole 38, into which the guide 37 is inserted. The elongated hole 38 includes a first elongated hole 38a, which serves as an unlock guide that extends along the circumferential direction about the pivot axis 01 (control shaft 26), and a second elongated hole 38b, which serves as an unlock holding guide that extends continuously from the first elongated hole 38a towards the pivot axis O1. Accordingly, when the guide 37 is in the first elongated hole 38a, the guide 37 is relatively movable (freely movable) along the first elongated hole 38a. This permits the lever member 31 to pivot about the pivot axis O1. When the guide 37 enters the second elongated hole 38b from the first elongated hole 38a, the pivoting of the lever member 31 is restricted. Alternatively, when the guide 37 is in the first elongated hole 38a and the guide 37 is held between the inner circumferential surfaces of the first elongated hole 38a, the pivoting of the arm member 33 about the pivot axis 02 is restricted. When the guide 37 is in the second elongated hole 38b, the pivoting of the arm member 33 about the pivot axis 02 is permitted.

In the present embodiment, while the guide 37 relatively moves along the first elongated hole 38a when the lever member 31 is pivoted in the clockwise direction as viewed in Fig. 4, the pivoting of the control shaft 26 in cooperation with the lever member 31 disengages the internal gear 22b and the external teeth of the poles 23 just enough to unlock the lock mechanism 20. This minimizes the operation amount (stroke) of the memory operation lever related to the pivoting of the lever member 31 and reduces the operation load. In this case, the arm member 33 restricts pivoting about the pivot axis 02 together with the cam member 34.

In a state immediately after the guide 37 enters the second elongated hole 38b from the first elongated hole 38a, the distance between the guide 37 and the pivot axis 02 is set to be shorter than the distance between the terminal end of the second elongated hole 38b and the pivot axis 02. Accordingly, the guide 37 moves toward the terminal end of the second elongated hole 38b after the unlocking of the lock mechanism 20 is completed (after completing switching to the unlock state). As a result, the guide 37 pushes the lever member 31 so that the lever member 31 further pivots in the clockwise direction as viewed in Fig. 4, that is, the direction for switching the lock mechanism 20 to the unlock state. That is, the second elongated hole 38b includes a pushing portion 38c serving as a contact surface pushed by the guide 37 so that the control shaft 26, which cooperates with the lever member 31, pivots to switch the lock mechanism 20 to the unlock state. Although the lever member 31 slightly oscillates about the pivot axis O1 while the guide 37 relatively moves in the second elongated hole 38b, the pivoting of the lever member 31 that would switch the lock mechanism 20 from the unlock state to the lock state is restricted. A coil spring 39 links the lever member 31 and the support pin 32. The coil spring 39 is urged in the direction the guide 37 relatively moves toward the terminal end of the first elongated hole 38a, that is, towards the second elongated hole 38b, or the direction for switching the lock mechanism 20 to the lock state.

A ring-shaped plate member 40, which is formed from a metal plate, is fixed to the upper plate 22. The plate member 40 is coupled to the coupling surface 22a. A saw-toothed meshing portion 40a is formed on the peripheral portion of the plate member 40.

An annular holding bracket 41, which is formed from a metal plate, is arranged pivotally and coaxially with the control shaft 26 (pivot axis 01) in a state encompassing the lock mechanism 20 at its inner side. More specifically, the holding bracket 41 is supported by the step 22c and arranged closer to the seat cushion frame 11 in the seat widthwise direction than a coupling surface C (see Fig. 3) of the seat back frame 12 and the upper plate 22. The outer diameter of most of the holding bracket 41 is smaller than the inner diameter of the holding member 35 (guide surface 35a). The holding bracket 41A has a circumferential wall, the lower right side of which is dented radially inward, as viewed in Fig. 2 to form a hooking dent 41 a. The distal portion of the cam member 34, which passes by the slot 35b, may be fitted to the holding bracket 41. When the pivoting of the cam member 34 is restricted in the state described above, the distal portion of the cam member 34 if fitted into the hooking dent 41 a thereby restricting pivoting of the holding bracket 41. The angular position of the holding bracket 41 in this state is referred to as an initial position.

The circumferential wall of the holding bracket 41 includes a portion extending from the hooking dent 41 a in the counterclockwise direction of Fig. 4, which bulges radially outward. The end of the bulging portion adjacent to the hooking dent 41 a forms a hooking piece 41 b. A restriction piece 11 b extends from the seat cushion frame 11 to restrict the pivoting of the hooking piece 41 b in the clockwise direction in Fig. 4. Accordingly, engagement of the hooking piece 41 b and the restriction piece 11 b restricts pivoting of the holding bracket 41 in the clockwise direction as viewed in Fig. 4. The angular position of the holding bracket 41 in this state conforms to the initial position. The pivoting restriction of the holding bracket 41 in the clockwise direction as viewed in Fig. 4 at the initial position is performed in cooperation with the cam member 34 and the restriction piece 11 b.

A memory pole 42, which is formed from a metal plate, has a basal portion coupled to the holding bracket 41 so as to be pivotal about a pivot axis 03 of a support pin 43, which is arranged in the vicinity of the hooking dent 41 a. The pivot axis 03 is parallel to the pivot axis 01. The memory pole 42 has a saw-toothed meshing portion 42a. The meshing portion 42a can be meshed with the meshing portion 40a of the plate member 40 by pivoting the memory pole 42 in the clockwise direction as viewed in Fig. 4 about the pivot axis 03. An urging member (e.g., spring) applies an urging force (impeding force) to the memory pole 42 in a direction that is opposite to the direction for meshing with the plate member 40 (counterclockwise direction in Fig. 4).

The memory pole 42A has a distal portion from which a flange extends toward the seat cushion frame 11. The flange has an outer surface that contacts the guide pin 36 or the holding member 35 (guide surface 35a) in accordance with the pivoting angular position of the holding bracket 41 (refer to Figs. 4 to 9). This restricts pivoting of the holding bracket 41 in the counterclockwise direction as viewed in Fig. 4. Further, the flange of the memory pole 42 includes a first arcuate portion 42b, which is spaced apart from the pivot axis O1 (control shaft 26) by a small radial distance, and a second arcuate portion 42c, which is spaced apart from the pivot axis 01 by a larger radial distance than the first arcuate portion 42b. The first and second arcuate portions 42b and 42c are connected by a step 42d. The first and second arcuate portions 42b and 42c are each arcuate and extend about the pivot axis O1 (control shaft 26). When the guide pin 36 moves from the first arcuate portion 42b to the second arcuate portion 42c by way of the step 42d as the lever member 31 pivots in the clockwise direction as viewed in Fig. 4, the memory pole 42 pivots about the pivot axis 03 in the clockwise direction as viewed in Fig. 4 to move toward the pivot axis O1 for an amount corresponding to the height of the step 42d. When the guide pin 36 is arranged in the second arcuate portion 42c, the meshing portion 42a of the memory pole 42 and the meshing portion 40a of the plate member 40 mesh with each other. That is, the memory pole 42 and plate member 40 are switched between a state of engagement and a state of disengagement in accordance with whether the guide pin 36 of the lever member 31 contacts the first arcuate portion 42b or the second arcuate portion 42c.

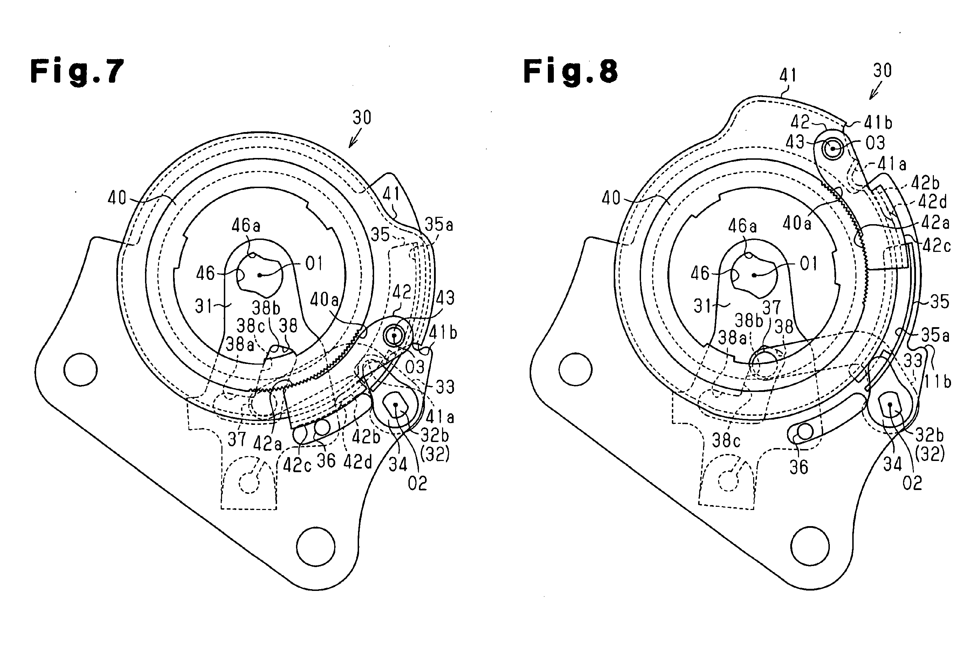

As shown in Figs. 8 and 9, a state in which the memory pole 42 is meshed with the plate member 40 is maintained by having the flange of the memory pole 42 enter the holding member 35. Accordingly, when the plate member 40 pivots in the counterclockwise direction as viewed in Fig. 4, that is, the direction in which the seat back frame 12 tilts forward, the memory pole 42, which is meshed with the plate member 40, pivots integrally with the holding bracket 41. In this state, as the cam member 34 pivots integrally with the arm member 33 in the clockwise direction as viewed in Fig. 4 as described above, the cam member 34 is disengaged from the holding bracket 41 (hooking dent 41 a). When the plate member 40 pivots in the clockwise direction as viewed in Fig. 4, that is, the direction in which the seat back frame 12 tilts rearward, the memory pole 42, which is meshed with the plate member 40, pivots integrally with the holding bracket 41. In this state, the distal portion of the cam member 34 is fitted into the hooking dent 41 a. Further, the hooking piece 41 b comes into contact with the restriction piece 11b. This restricts further pivoting of the holding bracket 41. As a result, the holding bracket 41 returns to the initial position.

The operation of the memory mechanism 30 will now be described. An operation force is not applied to the memory operation lever. Further, the guide 37, which is arranged in the first elongated hole 38a of the lever member 31 as shown in Fig. 4, restricts pivoting of the arm member 33 and the cam member 34 about the pivot axis 02. Here, the distal portion of the cam member 34 is fitted into the hooking dent 41 a, and pivoting of the holding bracket 41 about the pivot axis O1 is restricted.

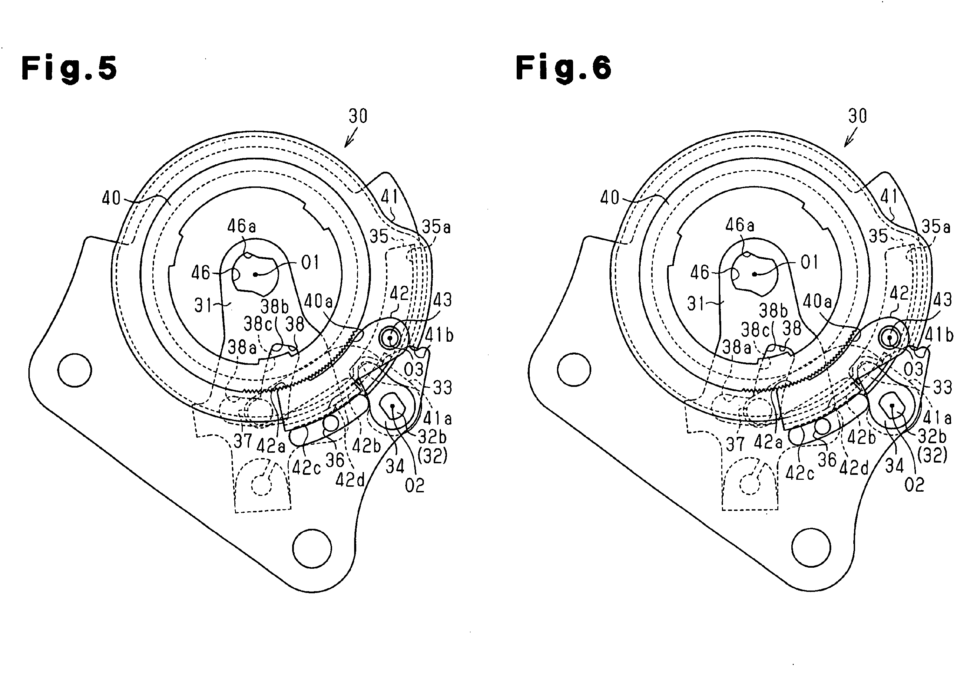

In this state, when operation of the memory operation lever pivots the lever member 31 in the clockwise direction as viewed in Fig. 4, the hinge 26c (control shaft 26), which is loosely fitted in the fitting hole 46, pivots to switch the lock mechanism 20 to the unlock state. This relatively moves the guide 37 in the first elongated hole 38a and thereby continuously restricts pivoting of the arm member 33 and the cam member 34 about the pivot axis 02. Since the pivoting of the cam member 34 about the pivot axis 02 is restricted, the pivoting of the holding bracket 41 about the pivot axis O1 is also continuously restricted. The guide pin 36 arranged in the lever member 31 moves from the first arcuate portion 42b to the second arcuate portion 42c by way of the step 42d of the memory pole 42. This pushes and pivots the memory pole 42 about the pivot axis 03 in the clockwise direction as viewed in Fig. 4 thereby meshing the memory pole 42 with the plate member 40. This couples the holding bracket 41, which is coupled to the memory pole 42, to the plate member 40 (seat back frame 12) so as to pivot integrally. As shown in Fig. 5, when the guide 37 reaches the end of the second elongated hole 38b that is closer to the first elongated hole 38a, the switching of the lock mechanism 20 to the unlock state is just enough to be completed. In this state, the guide 37 has not entered the second elongated hole 38b. Thus, the pivoting of the arm member 33 about the pivot axis 02 and the pivoting of the holding bracket 41 about the pivot axis O1 is still continuously restricted.

When the lever member 31 continues to pivot in the clockwise direction as viewed in Fig. 5 and the guide 37 enters the second elongated hole 38b as shown in Fig. 6, the restriction on the pivoting of the arm member 33 and the cam member 34 is eliminated. Accordingly, when the lever member 31 is further pivoted in the clockwise direction as viewed in Fig. 6, the arm member 33 and the cam member 34 start to pivot about the pivot axis 02 in the clockwise direction as shown in Fig. 7. As a result, pivoting of the holding bracket 41 is permitted. At the same time, the holding member 35 contacts the flange of the memory pole 42. This maintains the holding member 35 in a state meshed with the memory pole 42 and the plate member 40.

In this state, the plate member 40, which is coupled to the upper plate 22, is pivoted in the counterclockwise direction as viewed in Fig. 7 to tilt (collapse forward) the seat back 5 (seat back frame 12) to the frontmost side in the vehicle. This integrally pivots the holding bracket 41 together with the memory pole 42 that is meshed with the plate member 40, as shown in Fig. 8. The urging member 6 applies urging force as described above when the seat back 5 (seat back frame 12) is tilted to the frontmost side.

Here, the holding member 35 maintains the memory pole 42 and the plate member 40 in the meshed state. The cam member 34 pivots in the clockwise direction in Fig. 8 while disengaging from the holding bracket 41 (hooking dent 41 a). Further, the arm member 33 that integrally pivots with the cam member 34 moves the guide 37 toward the terminal end of the second elongated hole 38b, that is, toward the fitting hole 46. More specifically, when the arm member 33 (and cam member 34) pivots and moves the guide 37 toward the terminal end of the second elongated hole 38b, the urging force of the urging member 6 is indirectly applied to the arm member 33. The urging force of the urging member 6 (rotational force of seat back 5) causes the guide 37 to contact the second elongated hole 38b. Accordingly, the component force that pivots the lever member 31 in the clockwise direction as viewed in Fig. 8, that is, the component force that pivots the lever member 31 to switch the lock mechanism 20 to the unlock state is generated at the pushing portion 38c. Here, the second elongated hole 38b (pushing portion 38c) is pushed by the guide 37 further pivoting the lever member 31 in the clockwise direction as viewed in Fig. 8, that is, in the direction for switching the lock mechanism 20 to the unlock state, as described above. Accordingly, a surplus operation amount of the lever member 31 is obtained to ensure that the lock mechanism 20 is switched to the unlock state when the seat back 5 (seat back frame 12) is tilted to the frontmost side. The cam member 34 disengaged from the holding bracket 41 (hooking dent 41 a) restricts pivoting in the counterclockwise direction as viewed in Fig. 8 with the circumferential wall of the holding bracket 41.

When the plate member 40, which is coupled to the upper plate 22, is pivoted in the clockwise direction as viewed in Fig. 8 to return the angular position of the seat back 5 (seat back frame 12) to the angular position taken just before the seat back 5 (seat back frame 12) was tilted to the front most side, the distal portion of the cam member 34 starts to fit into the holding bracket 41 (hooking dent 41 a) that pivots integrally in the state described above, as shown in Fig. 9. Then, the procedures described above are performed in a reversed order to return to the state shown in Fig. 4. When the guide 37 enters the first elongated hole 38a, the lever member 31 urged by the coil spring 39 is pivoted back so that the guide 37 relatively moves toward the terminal end of the first elongated hole 38a.

The present embodiment has the advantages described below.
(1) To maintain the unlock state of the lock mechanism 20, the arm member 33 and the cam member 34 generate a component force in the direction for switching the lock mechanism 20 to the unlock state at the pushing portion 38c with the urging force of the urging member 6. Accordingly, even when the relative movement amount of the guide 37 in the first elongated hole 38a, that is, the operation amount of the memory operation lever, is set as the minimum operation amount for switching the lock mechanism 20 to the unlock state, the component force generates the surplus operation amount for switching the lock mechanism 20 to the unlock state. This further ensures that the lock mechanism 20 is maintained in the unlock state. Thus, the surplus operation force of the memory operation lever is reduced, and the operability is improved.
(2) The lever member 31 is pivotal about the same rotation axis as the control shaft 26. Further, the pivoting of the control shaft 26, which cooperates with the pivoting of the lever member 31, switches the lock mechanism 20 to the unlock state.
(3) The urging force of the urging member 6 urges the arm member 33 and the cam member 34 to generate a component force in the direction for switching the lock mechanism 20 to the unlock state at the pushing portion 38c.
(4) The operation of the memory mechanism 30 reduces the surplus operation force of the memory operation lever and improves the operability.
(5) After the memory pole 42 is meshed with the plate member 40, the lock mechanism 20 completes the switching to the unlock state. Further, after the memory pole 42 is meshed with the plate member 40, the cam member 34 and the holding bracket 41 (hooking dent 41 a) are disengaged from each other, and pivoting of the holding bracket 41 is permitted. Accordingly, erroneous operation of the memory mechanism 30 is prevented.

The above-discussed embodiment may be modified as described below.

In lieu of the elongated hole 38 (first and second elongated holes 38a and 38b) that engage with the guide 37A, similar elongated groove (or rib) may be used.

The urging force of the urging member 6 is applied to the guide 37, which is arranged at the arm member 33, along the extending direction of the second elongated hole 38b, which is arranged in the lever member 31. However, the relationship of these components may be reversed. Specifically, a guide may be arranged on the lever member 31, and a second elongated hole (or elongated groove or rib) that engages with the guide may be arranged in the arm member 33 or the like.

In lieu of the first and second arcuate portions 42b and 42c, a suitable curved surface or planar surface may be used.

In lieu of the first elongated hole 38a, a wall that moves relative to the guide 37 may be used as the unlock guide.

In lieu of the second elongated hole 38b, a wall that moves relative to the guide 37 may be used as the unlock guide.

The memory pole 42 may be urged in the direction in which it meshes with the plate member 40. In this case, for example, the meshing of the memory pole 42 and the plate member 40 is prohibited by the application of the impeding force with a stopper function of a pin or the like arranged on the memory operation lever. Further, the memory operation lever is operated to eliminate the stopper function (eliminate the impeding force) and mesh the memory pole 42 and plate member 40. Alternatively, a guide hole may be arranged in the memory pole 42 and a pin guided by the guide hole may be arranged on the lever member 31 so that the pivoting of the lever member 31 changes the meshed and disengaged state of the memory pole 42 without applying urging force to the memory pole 42.

The plate member 40 may be eliminated, and the engagement portion (meshing portion 40a) may be formed integrally with the upper plate 22.

The plate member 40 and the memory pole 42 may be engaged with each other by frictional engagement by a friction material used in lie of a meshing portion.

A case in which the seat back frame 12 (seat back) is tilted forward to the final tilt position has been described above. Instead, the seat back frame 12 (seat back) may be tilted rearward to a final tilt position.

The unlock operation lever 27 itself may be fitted with play to the hinge 26b without being fixed to the hinge 26b, and another component may be held in between to fix the unlock operation lever 27.

The center of pivot of the lever member 31 does not have to be coaxial with the control shaft 26.

The holding bracket 41 may be supported by a step arranged in the lower plate 21.

The lever member 31 may be formed integrally with the memory operation lever.

The operability of the memory operation lever is enhanced by arranging the pushing portion 38c in the second elongated hole 38b of the lever member 31 and using the urging force of the urging member 6. When the memory operation lever is applied to a device for operating a vehicle seat having a walk-in function, an accommodation function, and the like in which the front and rear positions of the vehicle seat may be shifted to a predetermined limit position, the operability may be improved in the same manner as the present embodiment. In other words, the present invention may be applied to a device having a function for moving the vehicle seat to a predetermined limit state. Even when the vehicle seat does not have an urging member (e.g., second seat), rotational force of the seat back produced by an operation performed by the user may be used to improve the operability of the memory operation lever.

### DESCRIPTION OF REFERENCE CHARACTERS

- 1: vehicle seat
- 6: urging member
- 11: seat cushion frame
- 12: seat back frame
- 20: lock mechanism
- 26: control shaft
- 30: memory mechanism
- 31: lever member (guide member)
- 33: arm member (movement member, pivot member)
- 34: cam member (movement member, pivot member)
- 37: guide (movement member, pivot member)
- 38: elongated hole
- 38a: first elongated hole (unlock guide)
- 38b: second elongated hole (unlock holding guide)
- 38c: pushing portion (contact surface)

## Claims

1. A vehicle seat operating device including a lock mechanism (20) capable of holding the position of a vehicle seat (1), the lock mechanism (20) being switched from a lock state to an unlock state by operating an operation lever, and the lock mechanism (20) being held in the unlock state when the vehicle seat (1) is in a state moved to a predetermined limit position, the vehicle seat operating device comprising:
a guide member (31) including an unlock holding guide (38b) having a contact surface (38c) formed so that the rotational force generates a component force in a direction for switching the lock mechanism (20) to the unlock state; and
a movement member (33, 34, 37) that cooperates with the guide member (31) so as to be relatively movable to each other;
**characterized in that**
the movement member (33, 34, 37) is capable of moving when the guide member (31) is operated,
the movement member (33, 34, 37) contacts the contact surface (38c) when the lock mechanism (20) is in the unlock state, and the guide member (31) is a lever member that pivots when the operation lever is operated, and the lever member pivots in cooperation with a control shaft (26) about a pivot axis that is the same as that of the control shaft (26) to switch the lock mechanism (20) to the unlock state.

2. The seat operating device according to claim 1, wherein the guide member (31) includes an unlock guide (38a), and the movement member (33, 34, 37) moves along the unlock guide (38a) when the operation lever is operated to switch the lock mechanism (20) from the lock state to the unlock state.

3. The seat operating device according to any one of claims 1 or 2, wherein the movement member (33, 34, 37) is a pivot member that pivots when moving relative to the unlock holding guide (38b), and the movement member (33, 34, 37) generates a component force in the direction for switching the lock mechanism (20) to the unlock state at the contact surface (38c) of said unlock holding guide (38b) when urged by the rotational force.

4. A vehicle seat reclining device comprising:
the seat operating device according to any one of claims 1 to 3, wherein the guide member (31) and the movement member (33, 34, 37) form a memory mechanism (30), and when the operation lever is operated, the memory mechanism (30) stores an angular position of a seat back frame (12) relative to a seat cushion frame (11) in the lock state of the lock mechanism (20) and switches the lock mechanism (20) to the unlock state to permit the seat back frame (12) to tilt to a predetermined tilt position.

## Patentansprüche

1. Fahrzeugsitzbetätigungsvorrichtung mit einem Verriegelungsmechanismus (20), der die Position eines Fahrzeugsitzes (1) halten kann, wobei der Verriegelungsmechanismus (20) von einem Verriegelungszustand zu einem Entriegelungszustand durch Betätigen eines Betätigungshebels umgeschaltet wird, und der Verriegelungsmechanismus (20) in dem Entriegelungszustand gehalten wird, wenn der Fahrzeugsitz (1) in einem Zustand ist, bei dem er zu einer vorbestimmten Grenzposition bewegt ist, wobei die Fahrzeugsitzbetätigungsvorrichtung folgendes aufweist:
ein Führungsbauteil (31) mit einer Entriegelungshalteführung (38b), die eine Kontaktfläche (38c) hat, die so ausgebildet ist, dass die Drehkraft eine Komponentenkraft in einer Richtung zum Umschalten des Verriegelungsmechanismus (20) zu dem Entriegelungszustand erzeugt; und
ein Bewegungsbauteil (33, 34, 37), das mit dem Führungsbauteil (31) zusammenwirkt, um relativ zueinander bewegbar zu sein;
**dadurch gekennzeichnet, dass**
das Bewegungsbauteil (33, 34, 37) sich bewegen kann, wenn das Führungsbauteil (31) betätigt wird,
das Bewegungsbauteil (33, 34, 37) die Kontaktfläche (38c) berührt, wenn der Verriegelungsmechanismus (20) in dem Entriegelungszustand ist, und das Führungsbauteil (31) ein Hebelbauteil ist, das schwenkt, wenn der Betätigungshebel betätigt wird, und das Hebelbauteil in Zusammenwirken mit einer Steuerungswelle (26) um eine Schwenkachse schwenkt, die dieselbe wie die der Steuerungswelle (26) ist, um den Verriegelungsmechanismus (20) zu dem Entriegelungszustand umzuschalten.

2. Sitzbetätigungsvorrichtung nach Anspruch 1, wobei das Führungsbauteil (31) eine Entriegelungsführung (38a) hat, und das Bewegungsbauteil (33, 34, 37) sich entlang der Entriegelungsführung (38a) bewegt, wenn der Betätigungshebel betätigt wird, um den Verriegelungsmechanismus (20) von dem Verriegelungszustand zu dem Entriegelungszustand umzuschalten.

3. Sitzbetätigungsvorrichtung nach einem von Ansprüchen 1 oder 2, wobei das Bewegungsbauteil (33, 34, 37) ein Schwenkbauteil ist, das schwenkt, wenn es sich relativ zu der Entriegelungshalteführung (38b) bewegt, und das Bewegungsbauteil (33, 34, 37) eine Komponentenkraft in der Richtung zum Umschalten des Verriegelungsmechanismus (20) zu dem Entriegelungszustand an der Kontaktfläche (38c) der Entriegelungshalteführung (38b) erzeugt, wenn es durch die Drehkraft gedrängt wird.

4. Fahrzeugsitzneigevorrichtung mit:
der Sitzbetätigungsvorrichtung nach einem der Ansprüche 1 bis 3, wobei das Führungsbauteil (31) und das Bewegungsbauteil (33, 34, 37) einen Memory-Mechanismus (30) bilden, und wenn der Betätigungshebel betätigt wird, der Memory-Mechanismus (30) eine Winkelposition eines Sitzlehnenrahmens (12) relativ zu einem Sitzpolsterrahmen (11) in dem Verriegelungszustand des Verriegelungsmechanismus (20) speichert und den Verriegelungsmechanismus (20) zu dem Entriegelungszustand umschaltet, um ein Neigen des Sitzlehnenrahmens (12) zu einer vorbestimmten Neigeposition zu gestatten.

## Revendications

1. Dispositif d'actionnement de siège de véhicule comportant un mécanisme de verrouillage (20) capable de maintenir la position d'un siège de véhicule (1), le mécanisme de verrouillage (20) étant commuté d'un état de verrouillage à un état de déverrouillage en actionnant un levier d'actionnement, et le mécanisme de verrouillage (20) étant maintenu dans l'état de déverrouillage lorsque le siège de véhicule (1) est dans un état déplacé à une position limite prédéterminée, le dispositif d'actionnement de siège de véhicule comprenant :
un élément guide (31) comportant un guide de maintien de déverrouillage (38b) présentant une surface de contact (38c) formée de sorte que la force de rotation génère une force composante dans une direction de commutation du mécanisme de verrouillage (20) à l'état de déverrouillage ; et
un élément de déplacement (33, 34, 37) qui coopère avec l'élément guide (31) afin d'être relativement mobile l'un par rapport à l'autre ;
**caractérisé en ce que**
l'élément de déplacement (33, 34, 37) est capable de se déplacer lorsque l'élément guide (31) est actionné,
l'élément de déplacement (33, 34, 37) vient en contact avec la surface de contact (38c) lorsque le mécanisme de verrouillage (20) est dans l'état de déverrouillage, et l'élément guide (31) est un élément de levier qui pivote lorsque le levier d'actionnement est actionné, et l'élément de levier pivote en collaboration avec un arbre de commande (26) autour d'un axe de pivotement qui est le même que celui de l'arbre de commande (26) pour commuter le mécanisme de verrouillage (20) à l'état de déverrouillage.

2. Dispositif d'actionnement de siège selon la revendication 1, dans lequel l'élément guide (31) comporte un guide de déverrouillage (38a), et l'élément de déplacement (33, 34, 37) se déplace le long du guide de déverrouillage (38a) lorsque le levier d'actionnement est actionné pour commuter le mécanisme de verrouillage (20) de l'état de verrouillage à l'état de déverrouillage.

3. Dispositif d'actionnement de siège selon l'une quelconque des revendications 1 ou 2, dans lequel l'élément de déplacement (33, 34, 37) est un élément de pivotement qui pivote lors du déplacement par rapport au guide de maintien de déverrouillage (38b), et l'élément de déplacement (33, 34, 37) génère une force composante dans la direction de commutation du mécanisme de verrouillage (20) à l'état de déverrouillage au niveau de la surface de contact (38c) dudit guide de maintien de déverrouillage (38b) lorsqu'il est poussé par la force de rotation.

4. Dispositif d'inclinaison de siège de véhicule comprenant :
le dispositif d'actionnement de siège selon l'une quelconque des revendications 1 à 3, où l'élément guide (31) et l'élément de déplacement (33, 34, 37) forment un mécanisme de mémoire (30), et lorsque le levier d'actionnement est actionné, le mécanisme de mémoire (30) stocke une position angulaire d'un châssis de dossier de siège (12) par rapport à un châssis de coussin de siège (11) dans l'état de verrouillage du mécanisme de verrouillage (20) et commute le mécanisme de verrouillage (20) à l'état de déverrouillage pour permettre au châssis de dossier de siège (12) de s'incliner à une position d'inclinaison prédéterminée.
